# EUROPÄISCHE PATENTANMELDUNG

(11) **EP 1 635 128 A2**
(43) Veröffentlichungstag der Anmeldung: **15.03.2006**
(21) Anmeldenummer: 05017842.5
(22) Anmeldetag: 17.08.2005
(51) Int. Cl.: F24J 2/54, F24J 2/10

(54) **Heliostatenvorrichtung und Verfahren zur Einstellung von Spiegelflächen einer Heliostatenvorrichtung**

(30) Priorität: 13.09.2004 DE 102004044841
(71) Anmelder: Deutsches Zentrum für Luft- und Raumfahrt e.V., 53175 Bonn (DE)
(72) Erfinder: Buck, Reiner, Dr., 70563 Stuttgart (DE); Pfahl, Andreas, 71083 Herrenberg (DE)
(74) Vertreter: Hoeger, Stellrecht & Partner Patentanwälte

(57) **Zusammenfassung**

Um eine Heliostatenvorrichtung (10), umfassend eine Mehrzahl von Spiegeleinrichtungen (12) mit beweglichen Spiegelflächen (16), mindestens einen Antrieb (32) zur Bewegung von Spiegelflächen (16) und eine Kopplungseinrichtung (34) zur Kopplung von Spiegelflächen (16) derart, daß sie gemeinsam beweglich sind, so zu verbessern, daß diese kostengünstig herstellbar ist mit guter Solarstrahlungsfokussierung, wird vorgeschlagen, daß die Kopplungseinrichtung (34) so ausgebildet ist, daß zwischen Kopplung und Entkopplung von Spiegelflächen (16) oder Gruppen von Spiegelflächen (16) an den mindestens einen Antrieb (32) umschaltbar ist.

## Beschreibung

Die Erfindung betrifft eine Heliostatenvorrichtung, umfassend eine Mehrzahl von Spiegeleinrichtungen mit beweglichen Spiegelflächen, mindestens einen Antrieb zur Bewegung von Spiegelflächen und eine Kopplungseinrichtung zur Kopplung von Spiegelflächen derart, daß sie gemeinsam beweglich sind.

Die Erfindung betrifft ferner ein Verfahren zur Einstellung von Spiegelflächen einer Heliostatenvorrichtung mit einer Mehrzahl von Spiegelflächen.

Heliostatenvorrichtungen mit einstellbaren Spiegelflächen und insbesondere gemeinsam einstellbaren Spiegelflächen sind beispielsweise aus der US 4,110,010, der US RE 30,960, der US 3,466,119, der US 4,056,313 oder der WO 02/070966 A1 bekannt.

Der Erfindung liegt die Aufgabe zugrunde, eine Heliostatenvorrichtung der eingangs genannten Art so zu verbessern, daß diese kostengünstig herstellbar ist mit guter Solarstrahlungsfokussierung.

Diese Aufgabe wird bei der eingangs genannten Heliostatenvorrichtung erfindungsgemäß dadurch gelöst, daß die Kopplungseinrichtung so ausgebildet ist, daß zwischen Kopplung und Entkopplung von Spiegelflächen oder Gruppen von Spiegelflächen an den mindestens einen Antrieb umschaltbar ist

Wenn ein gemeinsamer Antrieb zur Bewegung einer Mehrzahl von Spiegelflächen vorgesehen ist, dann läßt sich die entsprechende Heliostatenvorrichtung kostengünstig aufbauen, da die Anzahl der Antriebe verringert ist. Abschätzungen zeigen, daß, wenn nicht jeder einzelnen Spiegelfläche ein individueller Antriebsmotor zugeordnet wird, sich die Kosten einer Heliostatenvorrichtung um 40 % senken lassen.

Jedoch tritt das Problem auf, daß insbesondere bei nur um zwei Achsen beweglichen Spiegelflächen (die vorzugsweise leicht gekrümmt sind), die Nachführung der Spiegelflächen zu der Sonnenbewegung eine Defokussierung bewirkt. Dies ist auf einen Astigmatismus zurückzuführen. Die Spiegelflächen unterschiedlicher Spiegeleinrichtungen sind beabstandet zueinander, damit diese sich nicht beschatten können. Dies bedeutet eine Verbreiterung des Fokusbereiches. Bei einer gemeinsamen Führung der Spiegelflächen läßt sich dieser Astigmatismus nicht reduzieren bzw. kompensieren; der Astigmatismus ist um so größer, je größer der Abstand zwischen benachbarten Spiegelflächen ist.

Erfindungsgemäß ist die Kopplungseinrichtung so ausgebildet, daß zwischen Kopplung und Entkopplung einzelner Spiegelflächen oder von Gruppen von Spiegelflächen an den mindestens einen Antrieb umschaltbar ist. Dadurch lassen sich die Stellungen der einzelnen Spiegelflächen bzw. Stellungen der Spiegelflächen einzelner Gruppen individuell einstellen. Um eine bestimmte Spiegelfläche in eine bestimmte Position zu bringen, werden beispielsweise alle anderen Spiegelflächen entkoppelt und die ausgewählte Spiegelfläche wird in ihre ausgewählte Position gebracht. Dadurch läßt sich eine "Feinjustierung" der Heliostatenvorrichtung durchführen, um so wiederum durch individuelle Feinpositionierung der Spiegelflächen den Astigmatismus zu verringern bzw. zu kompensieren. Da dadurch wiederum die Fokussierung verbessert wird, läßt sich der Wirkungsgrad eines solarthermischen Kraftwerks verbessern.

Die erfindungsgemäße Heliostatenvorrichtung läßt sich auf einfache und kostengünstige Weise aufbauen.

Die Spiegelfläche einer Spiegeleinrichtung kann einteilig oder mehrteilig sein. Beispielsweise umfaßt die Spiegeleinrichtung als Spiegelfläche eine einzige Facette (einteilige Ausbildung) oder eine Mehrzahl von Spiegelfacetten (mehrteilige Ausbildung). Bei einer mehrteiligen Ausbildung stehen die Spiegelfacetten in einer festen Relation zueinander. Insbesondere lassen sich alle Spiegelfacetten einer Spiegelfläche gemeinsam bewegen.

Mit der erfindungsgemäßen Lösung ist es grundsätzlich möglich, daß jede Spiegelfläche individuell über Steuerung der Kopplung und Entkopplung einstellbar ist. Es kann auch vorgesehen sein, daß nicht jede einzelne Spiegelfläche individuell einstellbar ist, sondern daß Spiegeleinrichtungen in Gruppen angeordnet sind, wobei eine Kopplung einer Gruppe einer Kopplungseinrichtung derart ist, daß alle Spiegeleinrichtungen einer Gruppe synchron bewegt werden. In diesem Falle lassen sich dann die Spiegelflächen in unterschiedlichen Gruppen definiert einstellen, daß heißt mittels der erfindungsgemäßen Lösung lassen sich die Spiegelstellungen in einer ersten Gruppe anders einstellen als in einer zweiten Gruppe.

Günstigerweise ist über die Umschaltung zwischen Kopplung und Entkopplung jede Spiegelfläche individuell einstellbar bzw. sind Gruppen von Spiegelflächen individuell einstellbar. Dadurch lassen sich unterschiedliche Spiegelflächenstellungen zwischen unterschiedlichen Spiegeleinrichtungen bzw. unterschiedlichen Gruppen von Spiegeleinrichtungen realisieren.

Insbesondere ist jeder Spiegelfläche oder eine Gruppe von Spiegelflächen mindestens eine Kupplung zur Umschaltung zwischen Kopplung an den Antrieb und Entkopplung zugeordnet. Es läßt sich dann je nach Schaltstellung dieser Kupplung eine individuelle Einstellbarkeit einer Spiegeleinrichtung mit ihrer entsprechenden Spiegelfläche oder auch einer Gruppe von Spiegeleinrichtungen mit ihren entsprechenden Spiegelflächen durchführen. Wenn alle Kupplungen geschlossen sind, das heißt alle Spiegelflächen an den Antrieb gekoppelt sind, dann läßt sich eine gemeinsame Einstellung aller Spiegelflächen durchführen.

Insbesondere ist die mindestens eine Kupplung eine mechanische Kupplung. Bei dieser werden mechanische Kraftübertragungselemente in Eingriff oder außer Eingriff gebracht. Dadurch läßt sich auf einfache Weise eine Umschaltung zwischen Kopplung und Entkopplung durchführen.

Insbesondere ist getrennten Bewegungsachsen jeweils eine Kupplung zugeordnet. Dadurch lassen sich die Spiegelflächen-Positionen bezüglich jeder Bewegungsachse optimiert einstellen. Bei den Bewegungsachsen kann es sich dabei um die individuellen Bewegungsachsen von Spiegeleinrichtungen handeln. Wenn eine Gruppe von Spiegeleinrichtungen definiert ist, dann kann es sich bei den Bewegungsachsen auch um "gemeinsame" Bewegungsachsen handeln, deren Bewegungsantrieb zu einer synchronisierten Einstellung der entsprechenden Spiegelflächen der Gruppe führt.

Günstig ist es, wenn die mindestens eine Kupplung so ausgebildet ist, daß ohne Energiebeaufschlagung und/oder Signalbeaufschlagung eine Kopplung an die Kopplungseinrichtung vorliegt. Beispielsweise sind die Kupplungen dann so ausgebildet, daß zur Entkopplung eine Energiebeaufschlagung und/oder Signalbeaufschlagung nötig ist. Tritt ein Störfall auf wie beispielsweise ein Stromausfall, dann wird automatisch eine Kopplung erreicht. Dies ermöglicht es, bei einem Störfall die Spiegelflächen synchronisiert zu bewegen, um insbesondere eine Defokussierung zu erreichen.

Es ist dann ebenfalls vorteilhaft, wenn dem mindestens einen Antrieb eine Sicherheitseinrichtung zugeordnet ist, mittels welcher die Kopplungseinrichtung zur Defokussierung der Spiegelflächen betätigbar ist. Wenn die Kopplungseinrichtung bewegt wird, dann lassen sich die Spiegelflächen insbesondere synchronisiert bewegen, um eine Defokussierung zu erzielen. Die Sicherheitseinrichtung ist dabei derart ausgebildet, daß insbesondere bei einem Stromausfall eine Bewegung der Kopplungseinrichtung möglich ist. Dies kann insbesondere über Federelemente erreicht werden. Beispielsweise wird ein Antriebsmotor des Antriebs in einer bestimmten Stellung gehalten, wenn er im Normalbetrieb ist. Zum Halten in der Stellung ist eine Energiebeaufschlagung notwendig. Wenn der Strom ausfällt, dann wird der Antriebsmotor über ein oder mehrere Federelemente zurückgezogen. Dieses Zurückziehen bewirkt eine Bewegung eines Übertragungselements zur Bewegung der Spiegelflächen.

Auf konstruktiv einfache Weise läßt sich eine Heliostatenvorrichtung realisieren, bei welcher die Kopplungseinrichtung ein oder mehrere Übertragungselemente aufweist, welche über den mindestens einen Antrieb beweglich antreibbar sind. Über das oder die Übertragungselemente läßt sich das Drehmoment des Antriebs (und insbesondere des Antriebsmotors) auf die entfernt liegenden Spiegelflächen übertragen. Dadurch läßt sich insbesondere eine synchronisierte Bewegung aller Spiegelflächen der Heliostatenvorrichtung bzw. alle Gruppen von Spiegelflächen erreichen, wobei nicht jeder einzelnen Spiegelfläche ein individueller Antrieb zugeordnet werden muß.

Es ist dann günstig, wenn jeder Spiegelfläche oder einer Gruppe von Spiegelflächen ein oder mehrere Kopplungselemente zugeordnet sind, wobei ein Übertragungselement an ein Kopplungselement ankoppeln kann, um durch Bewegung des Übertragungselements das Kopplungselement zu bewegen. Das Kopplungselement ist so mit der entsprechenden Spiegelfläche verbunden, daß bei der Kraftübertragung des Übertragungselements auf das Kopplungselement die Spiegelfläche bewegt wird. Beispielsweise ist ein Kopplungselement über ein Zahnrad gebildet, welches an einer Haltevorrichtung einer Spiegelvorrichtung sitzt. Über das Übertragungselement läßt sich das Zahnrad drehen, wobei diese Drehung wiederum eine Drehung der Spiegelfläche bewirkt.

Ganz besonders vorteilhaft ist es, wenn die Ankopplung des mindestens einen Übertragungselements an das mindestens eine zugeordnete Kopplungselement schaltbar ist. Dadurch läßt sich zwischen Kopplung und Entkopplung umschalten, das heißt, es läßt sich schalten, ob das Übertragungselement auf eine Spiegelfläche wirkt oder nicht wirkt.

Eine Heliostatenvorrichtung läßt sich auf einfache Weise ausbilden, wenn jede Spiegelfläche um eine Achse drehbar ist und um eine zweite Achse drehbar ist, welche quer zur ersten Achse liegt. Dadurch läßt sich eine Nachführung bezüglich der Sonnenbewegung erreichen, wobei die entsprechende Heliostatenvorrichtung erheblich einfacher aufgebaut ist, als wenn jede Spiegelfläche um drei Achsen beweglich ist.

Beispielsweise ist die erste Achse eine Azimutalachse, welche insbesondere vertikal ausgerichtet ist.

Beispielsweise ist die zweite Achse eine Elevationsachse, welche insbesondere horizontal ausgerichtet ist.

Günstig ist es, wenn für die Bewegung der Spiegelflächen um die erste Achse und um die zweite Achse getrennte Übertragungselemente und getrennte Kopplungselemente vorgesehen sind. Dadurch lassen sich die Bewegungsformen der Spiegelflächen entkoppeln, um so wiederum eine optimierte Nachstellbarkeit zu erreichen.

Es ist insbesondere vorgesehen, daß das mindestens eine Übertragungselement ein flexibles Element wie beispielsweise eine Kette, ein Riemen oder ein Seil ist. Ein solches flexibles Element kann umgelenkt werden und auch über größere Distanzen ein Drehmoment übertragen. Bei entsprechender Führung des Übertragungselements lassen sich dann alle einzelnen Spiegelflächen einer Heliostatenvorrichtung erreichen, das heißt eine Kopplung an jede einzelne Spiegelfläche der Heliostatenvorrichtung ist auf einfache Weise ermöglicht.

Beispielsweise ist das mindestens eine Kopplungselement ein Antriebsrad wie beispielsweise ein Zahnrad. Das Übertragungselement überträgt dann seine ihm aufgeprägte Linearbewegung auf das Antriebsrad und versetzt dieses in Rotation. Diese Rotation wiederum bewirkt eine Drehung der zugeordneten Spiegelfläche.

Günstigerweise ist einer Spiegelfläche mindestens eine Halteeinrichtung zum Halten der Spiegelfläche in einer bestimmten Stellung zugeordnet. Grundsätzlich kann das Problem bestehen, daß, wenn auf Entkopplung geschaltet ist, eine Spiegelfläche in ihrem Lager frei schwingen kann. Windstöße können eine solche Schwingung veranlassen. Durch die Halteeinrichtung läßt sich die Spiegelfläche in ihrer bestimmten gewünschten Position fixieren, auch wenn eine Entkopplung vorliegt. Dadurch wird die eingestellte gewünschte Position gesichert.

Ganz besonders vorteilhaft ist es, wenn die Halteeinrichtung an die Schaltung der Kopplung und Entkopplung gekoppelt ist. Beispielsweise erfolgt ein automatisches Lösen der Haltefixierung der Spiegelfläche, wenn von Entkopplung auf Kopplung umgeschaltet wird. Umgekehrt kann beispielsweise ein automatisches Fixieren erfolgen, wenn von Kopplung auf Entkopplung umgeschaltet wird.

Die eingangs genannte Aufgabe wird erfindungsgemäß ferner dadurch gelöst, daß die Kopplungsvorrichtung so ausgebildet ist, daß die Kopplungsstärke einstellbar ist. Die Kopplungsvorrichtung kann dabei alternativ oder zusätzlich so ausgebildet sein, daß die Kopplungsstärke einstellbar ist.

Durch Einstellung der Kopplungsstärke, mittels welcher die Kopplungseinrichtung auf die jeweiligen Spiegelflächen wirkt, kann individuell die Bewegung jeder einzelnen Spiegelfläche eingestellt werden. Die Kopplungsstärke ist das Maß, wie die Bewegung des Antriebs übertragen wird und mit welchem Ausmaß in eine Bewegung der Spiegelfläche umgesetzt wird. Ist z.B. die Kopplungsstärke für alle Spiegelflächen gleich, dann wird über den Antrieb auch eine gleiche Bewegung aller Spiegelflächen erreicht. Über die Einstellung der Kopplungsstärke läßt sich die Bewegung der Spiegelflächen "analog" einstellen. (Über eine Umschaltung zwischen Kopplung und Entkopplung erfolgt gewissermaßen eine "digitale" Einstellung.)

Insbesondere ist der Bewegungsumfang der Spiegelflächen abhängig von der Kopplungsstärke. Beispielsweise bewegt sich eine Spiegelfläche in einem größeren Winkel, wenn die Kopplungsstärke größer ist.

Bei einer Ausführungsform ist ein Torsionselement vorgesehen, an welches eine Mehrzahl von Spiegelflächen gekoppelt ist, wobei je nach Torsionsverformung des Torsionselements die Spiegelflächen in unterschiedlichen Winkeln relativ zueinander positioniert sind. Wenn eine Torsionsverformung dem Torsionselement aufgeprägt wird, dann lassen sich unterschiedliche Spiegelflächen in unterschiedlichen Winkeln drehen. Über die Torsionsverformung des Torsionselement läßt sich (mechanisch) die Kopplungsstärke einstellen. Dadurch läßt sich individuell die Kopplungsstärke für die jeweiligen Spiegelflächen einstellen.

Es kann auch zusätzlich oder alternativ vorgesehen sein, daß die Kopplungsstärke über ein Übertragungselement einstellbar ist.

Insbesondere läßt sich die Kopplungsstärke durch Änderung der mechanischen Spannung des Übertragungselements einstellen. Beispielsweise ist das Übertragungselement ein Seil, eine Kette oder ein Riemen. Die Spannung kann dadurch eingestellt werden, daß an dem Übertragungselement ein oder mehrere Gewichte angeordnet werden. Je nach Wahl der Gewichte läßt sich eine definierte Seilspannung bzw. Kettenspannung bzw. Riemenspannung einstellen. Beispielsweise können auch Federelemente an dem Übertragungselement (und insbesondere in dem Übertragungselement) angeordnet sein. Über die Federkonstanten läßt sich die Spannung einstellen.

Es ist in diesem Zusammenhang günstig, wenn an dem Übertragungselement ein oder mehrere Federn angeordnet sind. Über diese läßt sich definiert die Spannung einstellen. Die Federelemente können auch auf einfache Weise "unwirksam" gemacht werden, indem sie über eine Klammer zusammengehalten werden.

Beispielsweise ist das Übertragungselement flexibel und an diesem ist mindestens ein Gewicht angeordnet. Durch Variation des Gewichts bezüglich Anordnung und/oder Masse läßt sich die Durchbiegung des Elements und damit seine wirksame Länge variieren. Dadurch wiederum ist die Kopplungsstärke einstellbar und der entsprechende Drehwinkel einstellbar.

Der Erfindung liegt ferner die Aufgabe zugrunde, ein Verfahren zur Einstellung von Spiegelflächen einer Heliostatenvorrichtung mit einer Mehrzahl von Spiegelflächen bereitzustellen, welches auf einfache Weise durchführbar ist.

Diese Aufgabe wird bei dem gekannten Verfahren erfindungsgemäß dadurch gelöst, daß Spiegelflächen über eine Kopplungseinrichtung gemeinsam bewegt werden und/oder zwischen Kopplung und Entkopplung der Kopplungseinrichtung an Spiegelflächen umgeschaltet wird und/oder die Kopplungsstärke eingestellt wird, um Spiegelflächen oder eine Gruppe von Spiegelflächen individuell einzustellen.

Das erfindungsgemäße Verfahren weist die bereits im Zusammenhang mit der erfindungsgemäßen Heliostatenvorrichtung erläuterten Vorteile auf.

Weitere vorteilhafte Ausgestaltungen wurden ebenfalls bereits im Zusammenhang mit der erfindungsgemäßen Heliostatenvorrichtung erläutert.

Insbesondere wird die Gesamtheit der Spiegelflächen durch Schaltung der Kopplung und Entkopplung und/oder Einstellung der Kopplungsstärke eingestellt. Beispielsweise läßt sich durch eine gemeinsame synchronisierte Bewegung aller Spiegelflächen oder von Gruppen von Spiegelflächen eine grobe Nachführung mit Grobfokussierung erreichen. Durch individuelle Schaltung der Kopplung und Entkopplung für einzelne Spiegelflächen bzw. individuelle Einstellung der Kopplungsstärke werden dann die Spiegelflächen individuell eingestellt und damit wiederum wird die Gesamtheit der Spiegelflächen vorzugsweise so eingestellt, daß der Astigmatismus verringert bzw. kompensiert ist.

Vorteilhaft ist es, wenn beim Störfall auf gekoppelt geschaltet wird. Insbesondere wird automatisch auf gekoppelt geschaltet. Es kann auch vorgesehen sein, daß gesteuert beispielsweise über eine Steuerungseinrichtung auf gekoppelt geschaltet wird. Es ist dann erreicht, daß eine Kopplung an die Spiegelflächen vorliegt. Es lassen sich dadurch die Spiegelflächen gemeinsam bewegen, um eine Defokussierung zu erreichen. Beispielsweise kann es sich bei dem Störfall um einen Stromausfall handeln. Wenn auf gekoppelt geschaltet wird, dann lassen sich die Spiegelflächen auf einfache Weise fokussieren.

Günstig ist es, wenn beim Störfall die Kopplungseinrichtung zur Defokussierung der Spiegelflächen bewegt wird und insbesondere automatisch bewegt wird. Wenn der Antrieb beispielsweise stromlos ist, dann kann über die Bewegung der Kopplungseinrichtung für eine Defokussierungsbewegung der Spiegelflächen gesorgt werden. Beispielsweise ist dazu eine Sicherheitseinrichtung vorgesehen, welche dem Antrieb zugeordnet ist. Diese ist so ausgebildet bzw. so geschaltet, daß bei einem Störfall für eine automatische Bewegung von einem oder mehreren Übertragungselementen gesorgt wird, die zu einer Defokussierung der Spiegelflächen führen. Wenn sichergestellt ist, daß bei einem Störfall alle Kupplungen auf gekoppelt geschaltet sind, dann ist auf einfache Weise eine Defokussierung erreicht und insbesondere muß dann keine zusätzliche Sicherheitseinrichtung vorgesehen werden.

Die nachfolgende Beschreibung bevorzugter Ausführungsformen dient im Zusammenhang mit der Zeichnung der näheren Erläuterung der Erfindung.

Es zeigen:
- Figur 1: eine schematische Draufsicht auf ein erstes Ausführungsbeispiel einer Heliostatenvorrichtung mit einer Mehrzahl von Spiegelflächen;
- Figur 2: eine Hinteransicht einer einzelnen Spiegelfläche mit Halter einer erfindungsgemäßen Heliostatenvorrichtung;
- Figur 3: eine Seitenansicht einer erfindungsgemäßen Heliostatenvorrichtung;
- Figur 4: eine vergrößerte Darstellung des Bereichs A gemäß Figur 3;
- Figur 5: eine schematische Teilansicht eines zweiten Ausführungsbeispiels einer erfindungsgemäßen Heliostatenvorrichtung, und
- Figur 6: eine schematische Teilansicht eines dritten Ausführungsbeispiels einer erfindungsgemäßen Heliostatenvorrichtung.

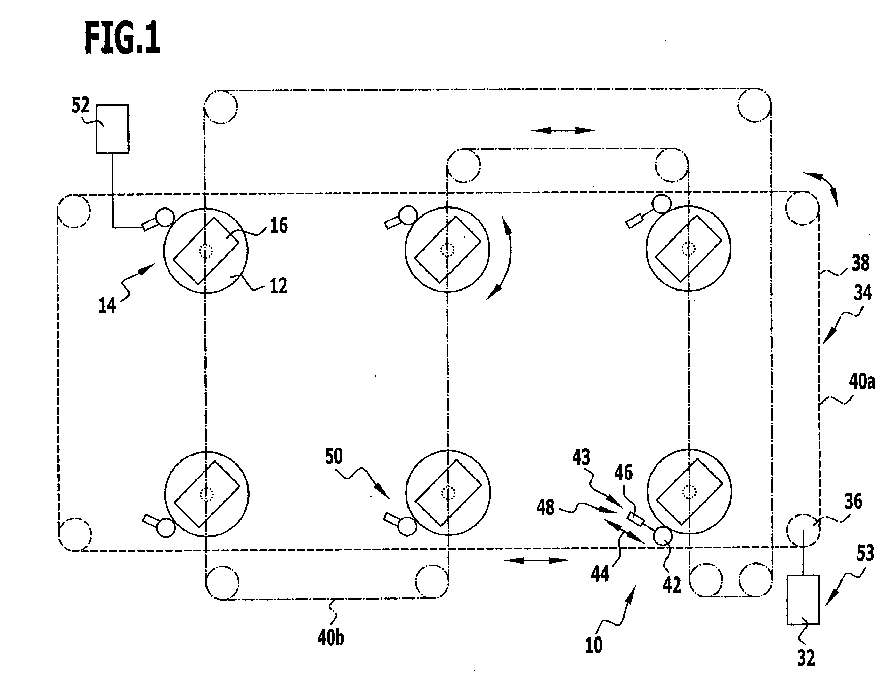

Ein Ausführungsbeispiel einer Heliostatenvorrichtung, welches in Figur 1 schematisch gezeigt und dort mit 10 bezeichnet ist, umfaßt eine Mehrzahl von Spiegeleinrichtungen 12. Die Spiegeleinrichtungen 12 sind in Reihen 14 angeordnet und bilden ein Heliostatenfeld.

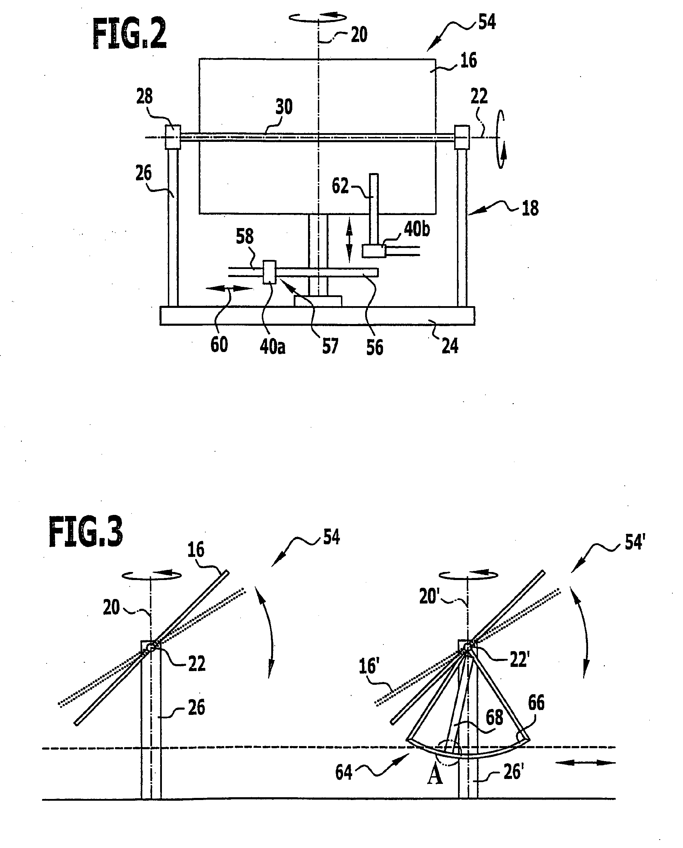

Eine Spiegeleinrichtung 12 umfaßt jeweils eine einteilige oder mehrteilige Spiegelfläche 16; die Spiegelfläche 16 kann aus einer oder mehreren Facetten aufgebaut sein. Bei einem mehrteiligen Aufbau sind die Facetten fest relativ zueinander positioniert. Die Spiegelfläche 16 einer Spiegeleinrichtung 12 ist als Ganzes beweglich. In den Figuren ist ein einteiliger Aufbau gezeigt. Die Spiegelfläche 16 ist an einem Halter 18 (Figuren 2 und 3) positioniert.

Der Halter 18 ist so ausgebildet, daß die jeweilige Spiegelfläche 16 um eine erste Achse 20 drehbar ist und um eine zweite Achse 22 drehbar ist, wobei die zweite Achse 22 quer und insbesondere senkrecht zur ersten Achse 20 liegt.

Die erste Achse 20 ist insbesondere eine Azimutalachse und die zweite Achse 22 ist eine Elevationsachse.

Durch Bewegung der jeweiligen Spiegelflächen 16 um ihre Achsen 20, 22 können diese der Sonne nachgeführt werden. Über die Spiegelflächen 16 wird Solarstrahlung auf einen Strahlungsempfänger konzentriert. Der Strahlungsempfänger ist insbesondere an einem Turm angeordnet.

Der Halter 18 einer Spiegeleinrichtung 12 umfaßt beispielsweise eine Basis 24, mittels welcher eine Drehlagerung zur Drehung der Spiegelfläche 16 um die erste Achse 20 gebildet ist.

An der Basis 24 ist ein Haltegerüst 26 montiert, an welchem über ein Drehlager 28 eine Welle 30 abgestützt ist. Die Welle 30 ist mit der Spiegelfläche 16 rückseitig verbunden, wobei die Rückseite diejenige Seite ist, welche der Solarstrahlungsseite abgewandt ist.

Alle Spiegelflächen 16 der Heliostatenvorrichtung 10 oder eine definierte Gruppe von Spiegelflächen 16 sind jeweils um die erste Achse 20 und die zweite Achse 22 gemeinsam beweglich. Dazu ist ein Antrieb 32 vorgesehen, welcher für die gemeinsame Bewegung sorgt. Dadurch muß nicht jeder einzelnen Spiegeleinrichtung 12 ein eigener individueller Antrieb zugeordnet werden.

Zur Kopplung des Antriebs 32 an die Spiegeleinrichtungen 12 oder eine Gruppe von Spiegeleinrichtungen ist eine als Ganzes mit 34 bezeichnete Kopplungseinrichtung vorgesehen. Diese sorgt dafür, daß das Drehmoment des Antriebs 32 auf die (angekoppelten) Spiegeleinrichtungen 12 übertragen wird.

Bei dem in Figur 1 gezeigten Ausführungsbeispiel treibt der Antrieb 32 ein oder mehrere Antriebsräder 36 an, an welchen ein Übertragungselement 38 gelagert ist. Das Übertragungselement 38 wird über die Rotation des Antriebsrads 36 linear bewegt, wobei sich diese Bewegung auf die einzelnen Spiegeleinrichtungen 12 bzw. Gruppen von Spiegeleinrichtungen 12 übertragen läßt und dort in eine Drehbewegung wandeln läßt.

Bei dem Übertragungselement 38 handelt es sich insbesondere um ein flexibles Element wie eine Kette, ein Riemen oder ein Seil. Dadurch läßt sich das Übertragungselement 38 umlenken und an jeder einzelnen Spiegeleinrichtung 12 oder Gruppen von Spiegeleinrichtungen 12 vorbeiführen.

Bei dem in Figur 1 gezeigten Ausführungsbeispiel ist jeweils ein Übertragungselement 40a für die Drehung der Spiegelflächen 16 um die Achse 20 und ein getrenntes Übertragungselement 40b für die Drehung der Spiegelflächen 16 der Spiegeleinrichtungen 12 um die zweite Achse 22 vorgesehen. Die beiden Übertragungselemente 40a, 40b sind dabei getrennt voneinander geführt. Die Führung ist derart, daß die Übertragungselemente 40a, 40b an jeder einzelnen Spiegeleinrichtung 12 vorbeigeführt sind, um das Drehmoment des Antriebs 32 auf die Spiegelflächen 16 zu deren Bewegung übertragen zu können.

Es ist grundsätzlich möglich, daß für die Übertragungselemente 40a, 40b getrennte Antriebe vorgesehen sind. Es ist auch möglich, daß ein gemeinsamer Antrieb 32 vorgesehen ist.

Jeder Spiegelfläche 16 oder einer Gruppe von Spiegelflächen 16, das heißt jeder einzelnen Spiegeleinrichtung 12 oder einer Gruppe von Spiegeleinrichtungen 12, ist ein jeweiliges Kopplungselement 42 zur Ankopplung des Übertragungselements 40a bzw. 40b zugeordnet. Bei dem in Figur 1 gezeigten Ausführungsbeispiel ist schematisch ein Kopplungselement 42 gezeigt, auf welches das Übertragungselement 40a wirken kann. Dieses Kopplungselement 42 ist insbesondere als Antriebsrad wie beispielsweise Zahnrad oder Riemenrad ausgebildet. Über das Übertragungselement 40a kann das Kopplungselement 42 gedreht werden, wobei diese Drehung eine Drehung an der entsprechenden Spiegeleinrichtung 12 um die erste Achse 20 bewirkt.

Beispielsweise ist zur Bildung einer entsprechenden Kupplung das Kopplungselement 42 derart schaltbar, daß einstellbar ist, ob eine Kopplung zu dem Übertragungselement 40a vorliegt oder eine Entkopplung vorliegt.

Pro Bewegungsachse ist jeder Spiegeleinrichtung 12 oder einer Gruppe von Spiegeleinrichtungen 12 eine Kupplung 43 zugeordnet, welche schaltbar ist.

Beispielsweise ist das Kopplungselement 42 linearverschieblich gelagert (in Figur 1 durch das Bezugszeichen 44 angedeutet). Dazu ist beispielsweise ein Antriebsrad als Kopplungselement 42 beispielsweise an einen Hydraulik- oder Pneumatik-Zylinder 46 gekoppelt. Je nach Zylinderstellung ist das Kopplungselement 42 in einer Kopplungsstellung 48 oder in einer Entkopplungsstellung 50. In der Kopplungsstellung 48 wirkt das entsprechende Übertragungselement 40a auf die Spiegeleinrichtung 12 und bewirkt eine Drehung um die erste Achse 20. In der Entkopplungsstellung 50 wirkt das Übertragungselement 40a nicht auf die Spiegeleinrichtung 12, das heißt diese wird nicht bewegt.

Zur Steuerung der Schaltung der Kopplungsstellung 48 und der Entkopplungsstellung 50 der Kopplungselemente 42a der Spiegeleinrichtungen 12 ist eine Steuerungseinrichtung 52 vorgesehen, welche an die einzelnen Kupplungen 43 derart gekoppelt ist, daß über sie steuerbar ist, ob die Kopplung oder Entkopplung geschaltet wird.

Die Schaltung zur Kopplung bzw. Entkopplung der Spiegeleinrichtung 12 bzw. Gruppe von Spiegeleinrichtungen 12 bezüglich einer Drehung um die zweite Achse 22 funktioniert prinzipiell gleich wie oben beschrieben. Es wird dabei über eine schaltbare Kupplung für eine Kopplung bzw. Entkopplung vom Übertragungselement 40b gesorgt.

Es ist grundsätzlich auch möglich, daß beispielsweise im Bereich der Spiegeleinrichtungen 12 zur Bildung einer Kupplung das Übertragungselement 40a und/oder 40b auf das entsprechende Kopplungselement zubewegt wird bzw. von diesem wegbewegt wird, um für eine Kopplung oder Entkopplung zu sorgen.

Die Kupplungen 43 sind vorzugsweise so ausgebildet, daß sie "normalerweise geschlossen sind" (NC-Kupplungen). Dies bedeutet, daß, wenn keine Signalbeaufschlagung und/oder Energiebeaufschlagung der Kupplungen 43 erfolgt, eine Kopplung der Spiegeleinrichtungen 12 bzw. der Gruppe von Spiegeleinrichtungen 12 an die Kopplungseinrichtung 34 vorliegt. Ist auf Entkopplung umgeschaltet und es erfolgt beispielsweise ein Stromausfall, dann wird automatisch die Kopplung hergestellt.

Es ist grundsätzlich auch möglich, daß die Steuerungseinrichtung 52 so ausgebildet ist, daß in einem Störfall die entsprechenden Signale abgegeben werden, die eine automatische Schaltung auf Kopplung bewirken.

Dem Antrieb 32 ist eine Sicherheitseinrichtung 53 zugeordnet. Diese kann in den Antrieb 32 integriert sein oder es kann sich um ein getrenntes Gerät handeln. Diese Sicherheitseinrichtung 32 ist so ausgebildet, daß, wenn die Sicherheitseinrichtung 53 in Betrieb ist, das Übertragungselement 38 um einen definierten Betrag bewegt wird.

Die Sicherheitseinrichtung 53 ist beispielsweise so ausgebildet, daß ein Motor des Antriebs 32 beim Störfall definiert verschoben wird und dabei das Übertragungselement 38 bewegt wird. Dies läßt sich beispielsweise über ein oder mehrere Federelemente erreichen. Es kann beispielsweise auch vorgesehen sein, daß die Sicherheitseinrichtung 53 ein Federelement und eine Klammer umfaßt. Bei normalem Betrieb des Antriebs 32 ist das Federelement über die Klammer in einer definierten Stellung gehalten. Im stromlosen Zustand öffnet die Klammer und das Federelement kann eine Federkraft ausüben, die zu einer Längenänderung des Übertragungselements 38 führt. Diese Längenänderung übt ein Drehmoment an die angekoppelten Spiegeleinrichtungen 12 oder Gruppen von Spiegeleinrichtungen aus und sorgt für eine entsprechende Bewegung der Spiegelflächen 16.

In einem Störungsfall ist über die Ausbildung der Kupplungen 43 für eine Ankopplung der Spiegelflächen 16 gesorgt. Das Übertragungselement 38 wird automatisch bewegt. Es werden also alle Kupplungen 43 bei einem Störfall automatisch oder über die Steuerungseinrichtung 52 gesteuert auf Kopplung geschaltet und das Übertragungselement 38 wird bewegt. Dadurch läßt sich eine schnelle Defokussierung der Spiegelflächen 16 erreichen.

In Figur 2 ist eine Spiegeleinrichtung 54 gezeigt, an welcher drehfest ein Kopplungselement 56 wie beispielsweise ein Zahnrad sitzt. In einer Kopplungsstellung 57 greift das Übertragungselement 40a (wie beispielsweise eine Kette) an dem Kopplungselement 56 an und bewirkt eine Drehung der Spiegeleinrichtung 54 mit seiner Spiegelfläche 16 um die erste Achse 20. Im Bereich des Kopplungselements 56 ist zur Ausbildung einer schaltbaren Kupplung ein Anlageelement 58 vorgesehen, über welches das Übertragungselement 40a so an das Kopplungselement 56 pressbar ist, daß eine Kraftübertragung erfolgen kann. Das Anlageelement 58 ist in einer Richtung/Gegenrichtung 60 beweglich.

Wenn das Anlageelement 58 das Übertragungselement 40a gegen das Kopplungselement 56 drückt, dann ist eine Kopplungsstellung erreicht. Wenn über Freigabe des Anlageelements 58 das Übertragungselement 40a von dem Kopplungselement 56 beabstandet ist, dann ist eine Entkopplungsstellung erreicht.

Das Kopplungselement 56 liegt insbesondere quer (vorzugsweise senkrecht) zu der ersten Achse 20. Die erste Achse 20 ist vorzugsweise eine vertikale Achse. Das Anlageelement 58 liegt dann horizontal.

Für die Kopplung an das Übertragungselement 40b kann ein Kopplungselement 62 vorgesehen sein. Bei dem Kopplungselement 62 handelt es sich beispielsweise um ein Zahnrad, an welches beispielsweise eine Kette als Übertragungselement 40b angreifen kann. Auf ähnliche Weise wie im Zusammenhang mit dem Kopplungselement 56 beschrieben, läßt sich das Übertragungselement 40b in Eingriff mit dem Kopplungselement 62 bringen und außer Eingriff mit dem Kopplungselement 62 bringen.

Je nach Eingriff der Übertragungselemente 40a, 40b an die zugeordneten Kopplungselemente 56 und 62 läßt sich die Ausrichtung der Spiegelfläche 16 der Spiegeleinrichtung 54 einstellen.

In Figur 3 sind verschiedene Schwenkstellungen von Spiegelflächen 16, 16' für Spiegeleinrichtungen 54, 54' gezeigt. (Die Spiegeleinrichtungen 54, 54' liegen in einer Reihe und sind grundsätzlich gleich ausgebildet.)

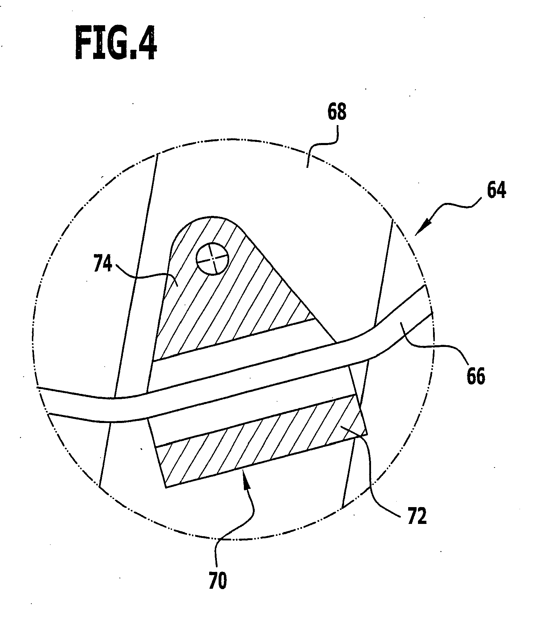

Es kann jeder Spiegeleinrichtung 54, 54' eine Halteeinrichtung 64 zugeordnet sein (Figuren 3 und 4), welche dazu dient, die entsprechende Spiegelfläche 16, 16' in einer definierten Stellung (bezogen auf die erste Achse 20 und/oder die zweite Achse 22) zu halten, auch wenn eine Entkopplung zu dem oder den Übertragungselementen 38 vorliegt. Dadurch ist sichergestellt, daß beispielsweise Windstöße die Spiegelflächen 16, 16' nicht bewegen können.

Bei einer Ausführungsform einer solchen Halteeinrichtung 64 (Figuren 3 und 4) sitzt an dem Haltegerüst 26 fest mit diesem verbunden eine Feststellschiene 66. Die Feststellschiene 66 erstreckt sich über einen Drehbereich der Spiegelfläche 16, 16' um die erste Achse 20 bzw. die zweite Achse 22. Bei dem in Figur 3 gezeigten Ausführungsbeispiel dient die Feststellschiene 66 zur Feststellung einer bestimmten Schwenkposition um die zweite Achse 22 (Elevationsachse).

Mit der Spiegelfläche 16 ist ein Halteelement 68 drehfest verbunden. Bei einer Drehung der Spiegelfläche 16, 16' dreht sich das Halteelement 68 mit.

Ein unteres Ende des Halteelements 68 ist im Bereich der Feststellschiene 66 geführt. Bei der Drehung der Spiegelfläche 16; 16' bewegt sich dieses untere Ende des Halteelements 68 entlang der Feststellschiene 66.

Zur Feststellung der Spiegelflächen 16, 16' über Fixierung des Halteelements 68 an der Feststellschiene 66 ist eine Bremse 70 vorgesehen (Figur 4), welche beispielsweise an oder in der Nähe eines unteren Ende des Feststellelements 68 angeordnet ist. Über die Bremse 70 läßt sich das Halteelement 68 mit der Feststellschiene 66 verklemmen. Die Bremse 70 weist dazu beispielsweise eine bewegliche Bremsbacke 72 auf, welche relativ zu einer unbeweglichen Bremsbacke 74 beweglich ist. Zwischen den beiden Bremsbacken 72 und 74 kann das Halteelement 68 mit der Feststellschiene 66 verklemmt werden und dabei eine bestimmte Schwenkstellung der Spiegelflächen 16, 16' um die zweite Achse 22 fixiert werden, auch wenn eine Entkopplung zwischen dem Übertragungselement 38 und den Spiegelfläche 16, 16' vorliegt.

Die Betätigung der Bremse 70 läßt sich insbesondere über die Steuerungseinrichtung 52 steuern. Dadurch läßt sich gleichzeitig mit der Entkopplung einer Spiegeleinrichtung 12 die Bremse 70 festsetzen bzw. bei der Kopplungsschaltung für eine Spiegeleinrichtung 12 die Bremse 70 lösen. Über die Steuerungseinrichtung 52 läßt sich damit das Heliostatenfeld der Heliostatenvorrichtung 10 steuern.

Es ist auch möglich, daß ein Haltevorgang direkt durch einen Auskopplungsvorgang über eine entsprechende mechanische Verbindung ausgelöst wird bzw. ein Halten durch einen Einkopplungsvorgang automatisch gelöst wird.

Die erfindungsgemäße Heliostatenvorrichtung (Heliostatenfeld von Spiegeleinrichtungen 12 bzw. 54, 54' funktioniert wie folgt):

Die Spiegeleinrichtungen 12, 54, 54' werden gemäß dem Sonnenstand ausgerichtet. Die Ausrichtung ist dabei zweiachsig, das heißt erfolgt beispielsweise azimutal über die erste Achse 20 und beispielsweise in der Elevation über die zweite Achse 22 jeder Spiegeleinrichtung 12.

Der Antrieb 32 (oder gegebenenfalls ein weiterer Antrieb) sorgt für eine gemeinsame Ausrichtung der Spiegeleinrichtungen 12. Die Momentenübertragung von dem Antrieb 32 auf die Spiegeleinrichtungen 12 zur Aktivierung deren Drehbewegung erfolgt über das Übertragungselement 38 bzw. die Übertragungselemente 40a, 40b. Wenn das Übertragungselement 38 bzw. die Übertragungselemente 40a, 40b mit den entsprechenden Spiegeleinrichtungen 12 über die jeweiligen Kopplungselemente 42 gekoppelt sind, dann erfolgt eine synchrone Bewegung aller Spiegeleinrichtungen 12 zueinander. Es ist dazu ein einziger Antrieb 32 bzw. gegebenenfalls ein zusätzlicher Antrieb notwendig. Es muß aber nicht für jede einzelne Spiegelfläche 16, 16' ein eigener individueller Antrieb vorgesehen werden.

Da die Antriebe einen erheblichen Kostenfaktor für eine Heliostatenvorrichtung darstellen (es gibt Schätzungen, die davon ausgehen, daß 40 % der Kosten einer Heliostatenvorrichtung auf die Antriebe fallen, wenn jeder Spiegeleinrichtung mit einem Antrieb versehen wird), läßt sich die Heliostatenvorrichtung 10 kostengünstig bauen.

Die Spiegelflächen 16, 16' sind vorzugsweise leicht gekrümmt. Sie lassen sich der Sonnenbewegung so nachführen, daß die reflektierte Sonnenstrahlung auf einen ortsfesten Brennpunkt fokussierbar ist.

Die Spiegeleinrichtungen 12 weisen zwei Drehbewegungsmöglichkeiten auf, nämlich die Drehbewegung der Spiegelflächen 16, 16' um die erste Achse 20 und um die zweite Achse 22. Durch eine synchrone Nachführung der Spiegeleinrichtung 12 über deren jeweiligen Achsen 20 und 22 kann sich jedoch die Abbildungsqualität verschlechtern. Es tritt insbesondere das Problem des

Astigmatismus auf; die Spiegelflächen 16, 16' sind beabstandet zueinander, damit sie sich nicht gegenseitig abschatten. Dadurch wird die Fokussierung verschlechtert. Grundsätzlich ist der Astigmatismus größer, je größer der Abstand ist.

Um den Astigmatismus zu verringern bzw. zu kompensieren, ist es deshalb notwendig, daß Spiegelflächen 16 einzelner Spiegeleinrichtungen 12 individuell oder gruppenweise in eine definierte Position gebracht werden, wobei die Spiegelflächen-Positionen unterschiedlicher Spiegeleinrichtungen 12 bzw. unterschiedlicher Gruppen unterschiedlich sein können. Über eine synchronisierte Bewegung aller Spiegeleinrichtungen 12 bzw. von Gruppen zusammen läßt sich eine Verringerung bzw. Kompensation des Astigmatismus nicht erreichen.

Bei der erfindungsgemäßen Lösung ist eine Kopplungseinrichtung 34 vorgesehen, welche so ausgestaltet ist, daß bei der Kopplung an alle Spiegeleinrichtungen 12 bzw. an Gruppen eine synchronisierte Bewegung möglich ist. Dadurch läßt sich eine "Grobnachführung" zur Sonnenbewegung erreichen mit einer Grobfokussierung. Es lassen sich dann durch gesteuerte Schaltung der Kopplung und Entkopplung für jede Spiegeleinrichtung 12 bzw. für Gruppen von Spiegeleinrichtungen Spiegelflächen in eine definierte Position bringen, das heißt dessen Spiegelflächen 16, 16' lassen sich in definierte Drehstellungen bezüglich der ersten Achse 20 und der zweiten Achse 22 bringen. Dadurch wird eine "Feinnachführung" erreicht und insbesondere wird bei entsprechender Durchführung der Astigmatismus ausgeglichen. Dadurch verbessert sich die Fokussierung.

Wenn beispielsweise eine einzelne Spiegelfläche 16 einer Spiegeleinrichtung 12 in eine bestimmte Position gebracht werden soll, dann werden alle anderen Spiegeleinrichtungen über die Kopplungseinrichtung 34 von dem oder den Übertragungselementen 38 abgekoppelt, während die entsprechende Spiegeleinrichtung gekoppelt bleibt oder angekoppelt wird. Über den Antrieb 32 läßt seine Spiegelfläche 16 sich dann in die definierte Stellung bringen.

So kann grundsätzlich mit jeder Spiegeleinrichtung verfahren werden oder auch mit einer Gruppe von Spiegeleinrichtungen.

Bei der Kopplungseinrichtung 34 erfolgt eine mechanische Kopplung bzw. Entkopplung der Spiegeleinrichtungen mit ihren jeweiligen Kopplungselementen 56, 62 von dem oder den Übertragungselementen 38 über die jeweiligen Kupplungen 43. Über die Steuerungseinrichtung 52 ist zwischen Kopplung und Entkopplung umschaltbar. Bei Kopplung läßt sich über den Antrieb 32 eine Bewegung um die erste Achse 20 und/oder die zweite Achse 32 erreichen. Bei Entkopplung bleibt die entsprechende Spiegelfläche 16, 16' in ihrer zuvor erreichten Stellung, wobei diese Stellung insbesondere durch die Bremse 70 festgestellt ist.

Durch die Ausbildung der Kupplungen 43 und durch die Sicherheitseinrichtung 53 ist gewährleistet, daß in einem Störfall, beispielsweise bei Stromausfall, die Spiegelflächen 16 defokussiert werden. Dadurch wird eine Überhitzung an einem Solarstrahlungsempfänger vermieden.

Um eine unterschiedliche Einstellung der Spiegelflächen unterschiedlicher Spiegeleinrichtungen zu erreichen, ist es grundsätzlich auch möglich, daß anstelle einer "Digitalschaltung" der Kopplung, nämlich Umschalten zwischen Kopplung und Entkopplung, die Kopplungsstärke individuell für jede Spiegeleinrichtung eingestellt wird. Über die Einstellung der Kopplungsstärke läßt sich "analog" ein entsprechend der Einstellung bewirkter Bewegungsumfang der entsprechenden Spiegelfläche erreichen.

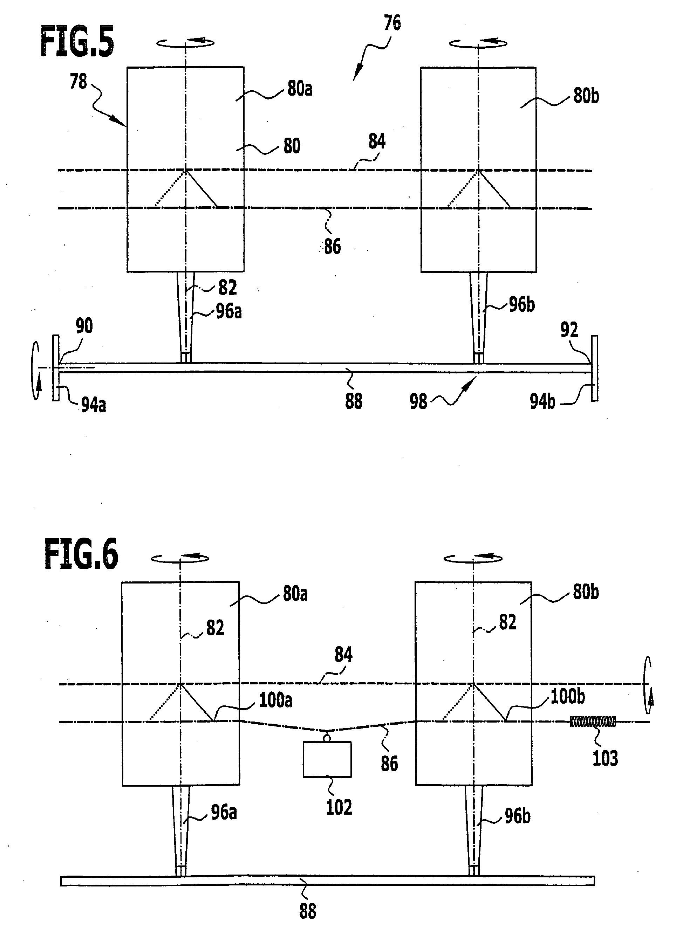

Bei einem zweiten Ausführungsbeispiel einer erfindungsgemäßen Heliostatenvorrichtung, welche in Figur 5 teilweise gezeigt und dort mit 76 bezeichnet ist, sind Spiegeleinrichtungen 78 vorgesehen. Diese weisen entsprechende Spiegelflächen 80 auf. Diese Spiegelflächen sind um eine erste Achse 82 und um eine zweite Achse 84, welche insbesondere eine Elevationsachse ist, drehbar. Mehrere Spiegelflächen 80a, 80b können zur Drehung um die erste Achse 82 über ein Übertragungselement 86 wie beispielsweise ein Seil miteinander gekoppelt sein. Wenn an dem Übertragungselement 86 entsprechend beispielsweise gezogen wird, dann wird eine Drehung der Spiegelflächen 80a, 80b um die erste Achse 82 bewirkt. Die Bewegung erfolgt dabei synchron.

Es kann dabei wie oben beschrieben eine mechanische Kupplung vorgesehen sein, über die zwischen Kopplung und Entkopplung schaltbar ist, um für eine individuelle Drehbarkeit der Spiegelflächen 80a, 80b zu sorgen.

Bei dem Ausführungsbeispiel 76 sitzen die Spiegelflächen 80a, 80b um die Achsen 82 drehbar an einer torsionsverformbaren Stange 88. An der Stange 88 ist über ein Ende 90 beispielsweise über einen Zahnradantrieb ein Torsionsmoment einbringbar. Dadurch läßt sich eine Torsionsverformung der Stange 88 bezogen auf ein gegenüberliegendes Ende 92 durchführen. An dem Ende 92 ist die Stange 88 beispielsweise festgehalten.

Es kann aber auch vorgesehen sein, daß am anderen Ende 92 ebenfalls ein Antrieb wie ein Zahnradantrieb ausgebildet ist. Dadurch sind Antriebe 94a, 94b symmetrisch bezüglich der Stange 88 angeordnet. Es läßt sich dadurch eine Torsionsverformung der Stange 88 beispielsweise in der einen Richtung über einen Antrieb über das Ende 90 einbringen und eine entgegengesetzte Torsionsbewegung über das andere Ende 92 bewirken.

Über die Torsionsverformung der Stange 88 erfahren die Spiegelflächen 80a, 80b, die über einen Halter 96a, 96b mit der Stange 88 verbunden sind, eine unterschiedliche Drehbewegung um die Achse 84. Dies bedeutet, daß sich über die Einstellung der Torsionsverformung der Stange 88 unterschiedliche Elevationswinkel zwischen den Spiegelflächen 80a und 80b einstellen lassen.

Durch die Aufprägung einer Torsionsverformung auf die Stange 88 lassen sich unterschiedliche Elevationswinkel einstellen.

Über die Torsionsverformung der Stange 88 wird die Kopplungsstärke einer Kopplungseinrichtung an die Spiegelflächen 80a, 80b eingestellt. Die Kopplungseinrichtung umfaßt insbesondere die Stange 88 und die Halter 96a, 96b und ist in Figur 5 als Ganzes mit 98 bezeichnet.

Für das zweite Ausführungsbeispiel 76 wurde die Möglichkeit der Einstellung der Kopplungsstärke anhand einer Torsionsverformung um die Achse beschrieben.

Es ist zusätzlich oder alternativ möglich, daß auch eine Einstellung der Kopplungsstärke für die Bewegung um die erste Achse 82 erfolgt (Figur 6).

Als Übertragungselement 86 ist beispielsweise ein flexibles Element wie ein Seil, eine Kette oder ein Riemen vorgesehen.

Das Übertragungselement 86 erstreckt sich zwischen Anknüpfungspunkten 100a, 100b zwischen benachbarten Spiegelflächen 80a, 80b. Es läßt sich nun in einem solchen Zwischenbereich die Kopplungsstärke dadurch verändern, daß das Übertragungselement 86 in diesem Bereich beeinflußt wird. Insbesondere wird die Spannung des Übertragungselements 86 quer zur ersten Achse 82 beeinflußt. Diese Beeinflussung läßt sich beispielsweise über ein oder mehrere Gewichte 102 erreichen, wobei die Gewichte in diesem Zwischenbereich aufgehängt werden. Die Art der Gewichte richtet sich nach der zu erzielenden Bewegung. Auf diese Weise kann bei Zug an dem Übertragungselement 86 die Spiegelfläche 80b ein anderes Drehmoment erfahren als die Spiegelfläche 80a, was wiederum in unterschiedlichen Drehstellungen resultiert.

Alternativ oder zusätzlich können zur Spannungsänderung auch Federelemente 103 vorgesehen sein, welche Übertragungselement-Bereiche miteinander verbinden.

Durch die Einstellung der Spannung im Übertragungselement zwischen benachbarten Spiegelflächen 80a, 80b beispielsweise über das oder die Gewichte 102 und/oder Federelemente 103 läßt sich so die Kopplungsstärke an die jeweiligen Spiegelflächen 80a, 80b einstellen. Über definierte Wahl des Gewichts 102 (und insbesondere über entsprechende Längeneinstellung) bzw. der Federkonstanten eines Federelements 103 läßt sich dadurch eine unterschiedliche Drehbewegung um die Achse 82 für unterschiedliche Spiegelflächen 80a, 80b einstellen. Dadurch wiederum läßt sich auf einfache Weise der Astigmatismus verringern bzw. kompensieren.

Erfindungsgemäß ist es vorgesehen, daß bei einer Heliostatenvorrichtung eine Kopplung der Spiegeleinrichtungen oder von Gruppen über eine Kopplungseinrichtung erfolgt. Dadurch lassen sich die Spiegeleinrichtungen oder Gruppen synchronisiert miteinander bewegen, um eine "Grobnachführung" bezüglich der Sonnenbewegung zu erreichen und eine "Grobfokussierung" zu erreichen. Die Kopplungseinrichtung ist derart ausgestaltet, daß die Kopplung schaltbar ist zwischen Kopplung und Entkopplung und/oder die Kopplungsstärke einstellbar ist. Dadurch wird es ermöglicht, Spiegeleinrichtungen der Heliostatenvorrichtung individuell zu bewegen oder Gruppen individuell zu bewegen, um eine Feinnachführung bezüglich der Sonnenbewegung zu erreichen und dadurch eine Feinfokussierung zu bewirken.

Die Kopplungseinrichtung umfaßt zur Schaltung zwischen Kopplung und Entkopplung insbesondere mechanische Kupplungen. Zur Einstellung der Kopplungsstärke können ebenfalls mechanische Elemente vorgesehen sein. Es braucht dann nicht für jede Spiegeleinrichtung ein eigener individueller Antrieb vorgesehen werden. Über eine Steuerungseinrichtung läßt sich die individuelle Einstellung jeder Spiegeleinrichtung erreichen.

## Patentansprüche

1. Heliostatenvorrichtung, umfassend eine Mehrzahl von Spiegeleinrichtungen (12) mit beweglichen Spiegelflächen (16, 16'; 80a, 80b), mindestens einen Antrieb (32) zur Bewegung von Spiegelflächen (16, 16'; 80a, 80b) und eine Kopplungseinrichtung (34; 98) zur Kopplung von Spiegelflächen (16, 16'; 80a, 80b) derart, daß sie gemeinsam beweglich sind, **dadurch gekennzeichnet, daß** die Kopplungseinrichtung (34) so ausgebildet ist, daß zwischen Kopplung und Entkopplung von Spiegelflächen (16; 16'; 80a; 80b) oder Gruppen von Spiegelflächen an den mindestens einen Antrieb (32) umschaltbar ist.

2. Heliostatenvorrichtung nach Anspruch 1, **dadurch gekennzeichnet, daß** über die Umschaltung zwischen Kopplung und Entkopplung jede Spiegelfläche (16; 16'; 80a; 80b) individuell einstellbar ist oder Gruppen von Spiegelflächen individuell einstellbar sind.

3. Heliostatenvorrichtung nach Anspruch 1 oder 2, **dadurch gekennzeichnet, daß** jeder Spiegelfläche (16, 16'; 80a, 80b) oder einer Gruppe von Spiegelflächen mindestens eine Kupplung (43) zur Umschaltung zwischen Kopplung an den Antrieb (32) und Entkopplung zugeordnet ist.

4. Heliostatenvorrichtung nach Anspruch 3, **dadurch gekennzeichnet, daß** die mindestens eine Kupplung (43) eine mechanische Kupplung ist.

5. Heliostatenvorrichtung nach Anspruch 3 oder 4, **dadurch gekennzeichnet, daß** getrennten Bewegungsachsen (20, 22; 82, 84) jeweils eine Kupplung (43) zugeordnet ist.

6. Heliostatenvorrichtung nach einem der Ansprüche 3 bis 5, **dadurch gekennzeichnet, daß** die mindestens eine Kupplung (43) so ausgebildet ist, daß ohne Energiebeaufschlagung und/oder Signalbeaufschlagung eine Kopplung an die Kopplungseinrichtung (34) vorliegt.

7. Heliostatenvorrichtung nach Anspruch 6, **dadurch gekennzeichnet, daß** dem mindestens einen Antrieb (32) eine Sicherheitseinrichtung (53) zugeordnet ist, mittels welcher die Kopplungseinrichtung (34) zur Defokussierung der Spiegelflächen (16) betätigbar ist.

8. Heliostatenvorrichtung nach einem der vorangehenden Ansprüche, **dadurch gekennzeichnet, daß** die Kopplungseinrichtung (34) ein oder mehrere Übertragungselemente (38; 40a, 40b) aufweist, welche über den mindestens einen Antrieb (32) beweglich antreibbar sind.

9. Heliostatenvorrichtung nach Anspruch 8, **dadurch gekennzeichnet, daß** jeder Spiegelfläche (16, 16') oder einer Gruppe von Spiegelflächen ein oder mehrere Kopplungselemente (56, 62) zugeordnet sind, wobei ein Übertragungselement (38; 40a, 40b) an ein Kopplungselement (56, 62) ankoppeln kann, um durch Bewegung des Übertragungselements (38; 40a, 40b) das Kopplungselement (56; 62) zu bewegen.

10. Heliostatenvorrichtung nach Anspruch 9, **dadurch gekennzeichnet, daß** die Ankopplung des mindestens einen Übertragungselements (38; 40a, 40b) an das mindestens eine zugeordnete Kopplungselement (56; 62) schaltbar ist.

11. Heliostatenvorrichtung nach einem der vorangehenden Ansprüche, **dadurch gekennzeichnet, daß** jede Spiegelfläche (16, 16') um eine erste Achse (20) drehbar ist und um eine zweite Achse (22) drehbar ist, welche quer zur ersten Achse (20) liegt.

12. Heliostatenvorrichtung nach Anspruch 11, **dadurch gekennzeichnet, daß** die erste Achse (20) eine Azimutalachse ist.

13. Heliostatenvorrichtung nach Anspruch 11 oder 12, **dadurch gekennzeichnet, daß** die zweite Achse (22) eine Elevationsachse ist.

14. Heliostatenvorrichtung nach einem der Ansprüche 9 bis 13, **dadurch gekennzeichnet, daß** für die Bewegung der Spiegelflächen (16, 16') um die erste Achse (20) und um die zweite Achse (22) getrennte Übertragungselemente (40a; 40b) und getrennte Kopplungselemente (56; 62) vorgesehen sind.

15. Heliostatenvorrichtung nach einem der Ansprüche 8 bis 14, **dadurch gekennzeichnet, daß** das mindestens eine Übertragungselement (38; 40a, 40b) ein flexibles Element ist.

16. Heliostatenvorrichtung nach einem der Ansprüche 9 bis 15, **dadurch gekennzeichnet, daß** das mindestens eine Kopplungselement (56; 62) ein Antriebsrad ist.

17. Heliostatenvorrichtung nach einem der vorangehenden Ansprüche, **dadurch gekennzeichnet, daß** einer Spiegelfläche (16; 16') eine Halteeinrichtung (64) zum Halten der Spiegelfläche (16; 16') in einer bestimmten Stellung zugeordnet ist.

18. Heliostatenvorrichtung nach Anspruch 17, **dadurch gekennzeichnet, daß** die Halteeinrichtung (64) an die Schaltung der Kopplung und Entkopplung gekoppelt ist.

19. Heliostatenvorrichtung nach dem Oberbegriff von Anspruch 1 oder einem der vorangehenden Ansprüche, **dadurch gekennzeichnet, daß** die Kopplungseinrichtung (98) so ausgebildet ist, daß die Kopplungsstärke einstellbar ist.

20. Heliostatenvorrichtung nach Anspruch 19, **dadurch gekennzeichnet, daß** der Bewegungsumfang der Spiegelflächen (80a, 80b) abhängig von der Kopplungsstärke ist.

21. Heliostatenvorrichtung nach Anspruch 19 oder 20, **dadurch gekennzeichnet, daß** ein Torsionselement (88) vorgesehen ist, an welches eine Mehrzahl von Spiegelflächen (80a, 80b) gekoppelt ist, wobei je nach Torsionsverformung des Torsionselements (88) die Spiegelflächen (80a, 80b) in unterschiedlichen Winkeln relativ zueinander positioniert sind.

22. Heliostatenvorrichtung nach einem der Ansprüche 19 bis 21, **dadurch gekennzeichnet, daß** die Kopplungsstärke über ein Übertragungselement (86) einstellbar ist.

23. Heliostatenvorrichtung nach Anspruch 22, **dadurch gekennzeichnet, daß** die Kopplungsstärke durch Änderung der mechanischen Spannung des Übertragungselements (86) einstellbar ist.

24. Heliostatenvorrichtung nach Anspruch 22, **dadurch gekennzeichnet, daß** an dem Übertragungselement (86) eine oder mehrere Federelemente (103) angeordnet sind.

25. Heliostatenvorrichtung nach einem der Ansprüche 22 bis 24, **dadurch gekennzeichnet, daß** das Übertragungselement (86) flexibel ist und an ihm mindestens ein Gewicht (106) angeordnet ist.

26. Verfahren zur Einstellung von Spiegelflächen einer Heliostatenvorrichtung mit einer Mehrzahl von Spiegelflächen, bei dem Spiegelflächen über eine Kopplungseinrichtung gemeinsam bewegt werden und/oder zwischen Kopplung und Entkopplung der Kopplungseinrichtung an Spiegelflächen umgeschaltet wird und/oder die Kopplungsstärke eingestellt wird, um Spiegelflächen oder eine Gruppe von Spiegelflächen individuell einzustellen.

27. Verfahren nach Anspruch 26, **dadurch gekennzeichnet, daß** die Gesamtheit der Spiegelflächen durch Schaltung der Kopplung und Entkopplung und/oder Einstellung der Kopplungsstärke eingestellt wird.

28. Verfahren nach Anspruch 26 oder 27, **dadurch gekennzeichnet, daß** bei einem Störfall auf gekoppelt geschaltet wird.

29. Verfahren nach Anspruch 28, **dadurch gekennzeichnet, daß** bei einem Störfall die Kopplungseinrichtung zur Defokussierung der Spiegelflächen bewegt wird.
